# EUROPÄISCHE PATENTSCHRIFT

(11) **EP 2 810 003 B1**
(45) Veröffentlichungstag und Bekanntmachung des Hinweises auf die Patenterteilung: **13.04.2016**
(21) Anmeldenummer: 13701400.7
(22) Anmeldetag: 16.01.2013
(51) Int. Cl.: F25D 11/02, F25D 29/00

(54) **KÄLTEGERÄT MIT ZWEI LAGERKAMMERN**
REFRIGERATION DEVICE HAVING TWO STORAGE CHAMBERS
APPAREIL RÉFRIGÉRANT À DEUX COMPARTIMENTS DE STOCKAGE

(30) Priorität: 01.02.2012 DE 102012201399
(43) Veröffentlichungstag der Anmeldung: 10.12.2014
(73) Patentinhaber: BSH Hausgeräte GmbH, 81739 München (DE)
(72) Erfinder: IHLE, Hans, 89537 Giengen (DE); NUIDING, Wolfgang, 89537 Giengen (DE)
(86) Internationale Anmeldenummer: PCT/EP2013/050705
(87) Internationale Veröffentlichungsnummer: WO 2013/113552

(56) Entgegenhaltungen:
- EP-A2- 0 602 371
- DE-A1-102008 044 289
- DE-U1-202009 002 222

## Beschreibung

Die vorliegende Erfindung betrifft ein Kältegerät mit einer ersten und einer zweiten Lagerkammer, die für den Betrieb bei unterschiedlichen Temperaturen vorgesehen sind, wie etwa einem Gefrier- und einem Normalkühlfach.

Aus EP 1 426 711 A2 ist ein Kältegerät dieses Typs bekannt, bei dem ein Verdampfer der zweiten Lagerkammer von einem Verdichter wahlweise direkt oder indirekt über einen vorgeschalteten Verdampfer der ersten Lagerkammer mit Kältemittel versorgbar ist. Wenn dieses herkömmliche Kältegerät ausgeschaltet gewesen ist, so dass beide Lagerfächer über ihrer Solltemperatur sind, und das Kältegerät wieder eingeschaltet wird, dann sollen die beiden Verdampfer zunächst in Reihe mit Kältemittel versorgt werden, damit der Beginn der Kühlwirkung im ersten Lagerfach nicht zu lange auf sich warten lässt. Auf die Betriebsphase mit in Reihe versorgten Verdampfern soll sich dann eine Betriebsphase anschließen, in der alleine die zweite Lagerkammer mit Kältemittel versorgt wird.

Dieses herkömmliche Kältegerät hat einen ersten Temperaturfühler am ersten Lagerfach und einen zweiten Temperaturfühler am zweiten Lagerfach, die zwar mit einer Steuereinheit verbunden sind, wobei jedoch nicht erläutert ist, wie die Steuereinheit auf von diesen beiden Temperaturfühlern erfasste Temperaturen reagiert. Eine sinnvolle Möglichkeit wäre, dass die Steuereinheit bei Erfassung einer zu hohen Temperatur im zweiten Lagerfach den Verdichter einschaltet und nur den Verdampfer des zweiten Lagerfachs mit Kältemittel versorgt, im Falle einer zu hohen Temperatur im ersten Lagerfach hingegen - in Ermangelung einer anderen Möglichkeit - beide Verdampfer in Reihe versorgt. Dann ergibt sich allerdings das Problem, dass, wenn zuerst eine zu hohe Temperatur im zweiten Lagerfach festgestellt wird, der Verdichter eingeschaltet wird, um den Verdampfer des zweiten Lagerfachs zu versorgen, und während der Verdichter läuft, die Temperatur auch im ersten Lagerfach zu hoch wird, auf eine serielle Versorgung der Verdampfer umgeschaltet werden muss. Dies hat zur Folge, dass aus dem Verdampfer des ersten Lagerfachs herrührendes warmes Kältemittel kaltes Kältemittel verdrängt, das sich zum Umschaltzeitpunkt bereits im Verdampfer des zweiten Lagerfachs befindet. Die in diesem verdrängten Kältemittel gebundene thermische Energie geht ungenutzt verloren und beeinträchtigt somit den Gesamtwirkungsgrad des Kältegeräts. Darüber hinaus führt die Verdunstung dieses Kältemittels in einer zum Verdampfer führenden Saugleitung dazu, dass sich diese stark abkühlt, so dass sich an ihr Schwitzwasser bilden kann. Das Schwitzwasser kann wiederum zu Schäden am Kältegerät oder an dessen Umgebung führen.

DE 20 2009 0022 22 U1 offenbart ein Kältegerät gemäß dem Oberbegriff des Anspruchs 1.

Es ist daher wünschenswert, ein Kältegerät mit wenigstens zwei wahlweise in Reihe oder einzeln versorgbaren Verdampfern zu schaffen, bei dem eine Verdrängung von kaltem Kältemittel aus einem stromabwärtigen Verdampfer im laufenden Betrieb des Verdichters vermieden ist.

Die Aufgabe wird gelöst durch ein Kältegerät gemäß Anspruch 1, insbesondere ein Haushaltskältegerät, mit wenigstens einer ersten und einer zweiten Lagerkammer, wobei der ersten Lagerkammer ein erster Verdampfer und ein erster Temperaturfühler zugeordnet sind und der zweiten Lagerkammer ein zweiter Verdampfer und ein zweiter Temperaturfühler zugeordnet sind, einem Verdichter und einem Wegeventil, welches in einer ersten Stellung den zweiten Verdampfer über den ersten Verdampfer mit einem Druckanschluss des Verdichters verbindet und in einer zweiten Stellung den zweiten Verdampfer unter Umgehung des ersten Verdampfers mit dem Druckanschluss verbindet, und einer Steuereinheit, die eingerichtet ist, bei laufendem Verdichter das Wegeventil von der ersten in zweite Stellung umzuschalten, diese Steuerschaltung ferner eingerichtet ist, wenn die vom ersten Temperaturfühler erfasste Temperatur einen ersten Einschaltgrenzwert überschritten hat, zunächst den Verdichter zu betreiben, während sich das Wegeventil in der ersten Stellung befindet, und den Verdichter erst wieder auszuschalten, wenn die von beiden Temperaturfühlern erfassten Temperaturen zugeordnete erste bzw. zweite Ausschaltgrenzwerte unterschritten haben. D.h. wenn eine hohe Temperatur in der ersten Lagerkammer zum Einschalten des Verdichters geführt hat, läuft der Verdichter solange weiter, bis in beiden Lagerkammern die Temperatur unter den jeweiligen Ausschaltgrenzwert dieser Lagerkammer gefallen ist, selbst wenn zum Zeitpunkt des Einschaltens des Verdichters die Temperatur in der zweiten Lagerkammer unterhalb eines für diese definierten Einschaltgrenzwerts lag. Wenn so bei jedem Kühlen der ersten Lagerkammer die zweite bis an ihre Ausschaltgrenztemperatur mitgekühlt wird, kann die Wahrscheinlichkeit, dass die zweite Lagerkammer jemals ihre Einschaltgrenztemperatur erreicht, auf ein Minimum reduziert werden. Wenn diese aber nie ihre Einschaltgrenztemperatur erreicht, dann besteht auch niemals die Notwendigkeit, den Verdichter zu starten, während sich das Wegeventil in der zweiten Stellung befindet, und folglich kann auch ein Umschalten des Wegeventils in die erste Stellung bei laufendem Verdichter nicht notwendig werden.

Zweckmäßigerweise sollte die Steuereinheit eingerichtet sein, das Wegeventil von der ersten in die zweite Stellung umzuschalten, wenn die vom ersten Temperaturfühler erfasste Temperatur den ersten Ausschaltgrenzwert unterschritten hat und gleichzeitig die vom zweiten Temperaturfühler erfasste Temperatur den zweiten Ausschaltgrenzwert noch nicht unterschritten hat. So kann eine übermäßige Abkühlung der ersten Lagerkammer vermieden werden, was wiederum die Wahrscheinlichkeit erhöht, dass die erste Lagerkammer vor der zweiten wieder ihre jeweilige Einschaltgrenztemperatur erreichen wird.

Selbst wenn der Fall eintritt, dass die Temperatur der zweiten Lagerkammer den zweiten Einschaltgrenzwert überschreitet und somit ein Einschalten des Verdichter erforderlich macht, während die Temperatur der ersten Lagerkammer noch unter dem ersten Einschaltgrenzwert ist, kann ein Umschalten des Wegeventils von der zweiten in die erste Stellung bei laufendem Verdichter vermieden werden, wenn für die erste Lagerkammer ein intermediärer Grenzwert festgelegt wird und der Verdichter mit dem Wegeventil in der ersten Stellung gestartet wird, falls die vom ersten Temperaturfühler erfasste Temperatur über diesem intermediären Grenzwert liegt, wohingegen der Verdichter mit dem Wegeventil in der zweiten Stellung gestartet werden darf, wenn die vom ersten Temperaturfühler erfasste Temperatur unter dem intermediären Grenzwert liegt. Der intermediäre Grenzwert ist zweckmäßigerweise an die Kühlleistung des Verdichters und eine zu erwartende Anstiegsgeschwindigkeit der Temperatur in der ersten Lagerkammer so angepasst, dass, falls der Verdichter mit dem Wegeventil in der zweiten Stellung gestartet worden ist, die Leistung des Verdichters ausreicht, um die zweite Lagerkammer unter die zweite Ausschalttemperatur abzukühlen, bevor die erste Lagerkammer die erste Einschalttemperatur erreicht.

Die Wahrscheinlichkeit, dass der Verdichter wegen Überschreitung der zweiten Einschalttemperatur eingeschaltet werden muss, kann zusätzlich noch dadurch verringert werden, dass die Differenz zwischen zweiter Einschalttemperatur und zweiter Ausschalttemperatur größer gewählt wird als die Differenz zwischen ersten Einschalttemperatur und erster Ausschalttemperatur.

Der Kältemittelkreislauf des erfindungsgemäßen Kältegeräts kann einen einfachen Aufbau mit einem geringen Strömungswiderstand eines die beiden Verdampfer verbindenden Leitungsabschnitts und dementsprechend identischen Verdampfungstemperaturen in beiden Verdampfern haben. Um unterschiedliche Temperaturen in beiden Lagerkammern einzustellen, ist dann zweckmäßigerweise einer der Verdampfer in einer von der zugeordneten Lagerkammer getrennten Verdampferkammer untergebracht und ein Ventilator zum Antreiben eines Luftaustauschs zwischen dieser Lagerkammer und der Verdampferkammer ist durch die Steuereinheit gesteuert.

Der jeweils andere Verdampfer kann in unmittelbarem thermischen Kontakt mit der zugeordneten Lagerkammer angeordnet sein.

Weitere Merkmale und Vorteile der Erfindung ergeben sich aus der nachfolgenden Beschreibung von Ausführungsbeispielen unter Bezugnahme auf die beigefügten Figuren.
- Fig. 1: eine schematische Darstellung eines erfindungsgemäßen Kältegeräts;
- Fig. 2: ein Flussdiagramm eines Arbeitsverfahrens der Steuereinheit des Kältegeräts aus Fig. 1; und
- Fig. 3: einen typischen Ablauf von Betriebsphasen des Verdichters und der daraus resultierenden Temperaturen in Normalkühlfach und Gefrierfach des Kältegeräts aus Fig. 1.

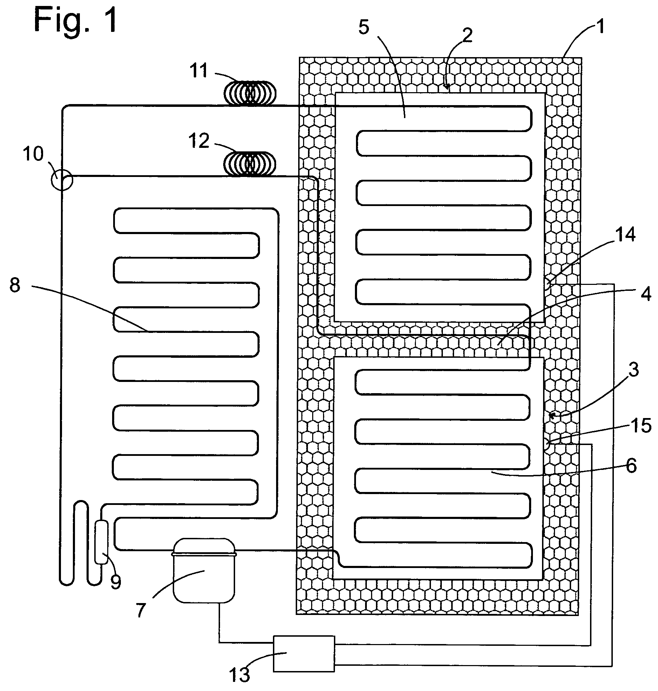

Fig. 1 zeigt schematisch ein Haushaltskältegerät mit einem wärmeisolierenden Gehäuse 1, dessen Innenraum in zwei Lagerkammern, hier ein Normalkühlfach 2 und ein darunter angeordnetes Gefrierfach 3, unterteilt ist. Die Fächer 2, 3 sind durch eine Wand 4 getrennt, die wie die die Fächer 2, 3 umgebenden Wände des Gehäuses 1 mit Isoliermaterial ausgefüllt ist.

Beiden Lagerkammern, Normalkühlfach 2 und Gefrierfach 3, ist jeweils ein Verdampfer 5 bzw. 6 zugeordnet. Der Verdampfer 5 des Normalkühlfachs 2 ist in an sich bekannter und daher in der Figur nicht eigens dargestellter Weise als Nofrost-Verdampfer ausgeführt, d.h. er ist in einer von dem eigentlichen Normalkühlfach 2 getrennten Verdampferkammer untergebracht, der mit dem Normalkühlfach 2 über Luftdurchgänge kommuniziert, und an einem dieser Durchgänge ist ein Ventilator angebracht, um den Luftaustausch zwischen Verdampferkammer und Normalkühlfach 2 und die daraus resultierende Abkühlung des Normalkühlfachs 2 zu steuern. Der Gefrierfachverdampfer 6 kann als Coldwall-Verdampfer ausgeführt sein.

Die Verdampfer 5, 6 sind Teil eines Kältemittelkreislaufs, der ferner in an sich bekannter Weise einen Verdichter 7, einen z.B. an einer Rückwand des Gehäuses 1 angebrachten Verflüssiger 8 und einen Trockner 9 umfasst. Ein stromabwärts vom Verflüssiger 8 angeordnetes Wegeventil 10 leitet einen vom Verdichter 7 angetriebenen Kältemittelstrom entweder über eine erste Kapillare 11 in den Normalkühlfach-Verdampfer 5 und den ihm in Reihe nachgeschalteten Gefrierfach-Verdampfer 6 zurück zum Verdichter 7, oder über eine zweite Kapillare 12 direkt zum Gefrierfach-Verdampfer 6. Das Wegeventil 10 ist hier der Einfachheit halber als ein einziges an einer Verzeigung der Kältemittelleitung angeordnetes Bauteil dargestellt; für den Fachmann liegt auf der Hand, dass es auch durch zwei - ggf. auch örtlich voneinander beabstandete und baulich getrennte - Absperrventile an den zu den zwei Kapillaren 11, 12 führenden Leitungszweigen gebildet sein kann.

Der Ventilator und das Wegeventil 10 sind durch eine Steuereinheit 13 gesteuert, die mit Temperaturfühlern 14, 15 im Normalkühlfach 2 bzw. im Gefrierfach 3 verbunden ist, um von diesem Lufttemperaturen Tnk des Normalkühlfachs bzw. Tf des Gefrierfachs zu empfangen.

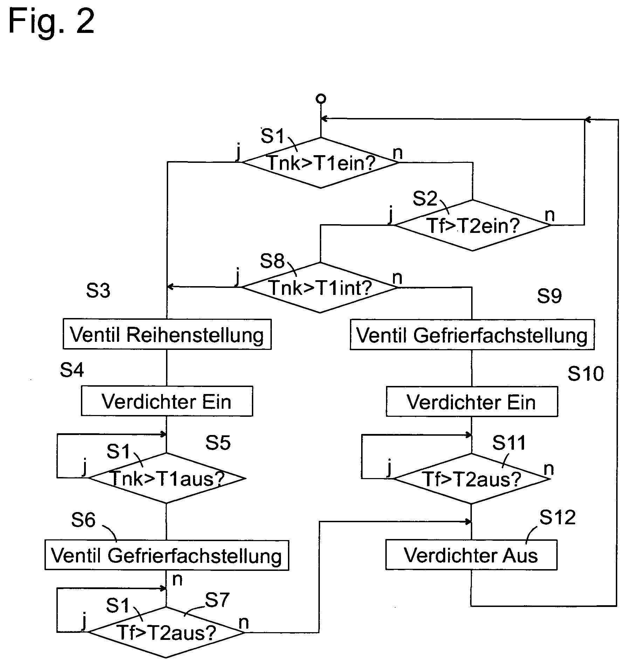

Ein Arbeitsverfahren der Steuereinheit 13 wird anhand des Flussdiagramms der Fig. 2 beschrieben. Die Beschreibung des Verfahrens setzt an einem Zeitpunkt ein, an dem der Verdichter 7 ausgeschaltet ist. Die Steuereinheit überprüft in Schritt S1, ob die Temperatur Tnk des Normalkühlfachs 2 über eine erste Einschalttemperatur T1 ein angestiegen ist. Wenn nicht, folgt in Schritt S2 eine Überprüfung, ob die Temperatur Tf des Gefrierfachs 3 dessen Einschaltgrenztemperatur T2ein überschritten hat. Ist auch dies nicht der Fall, kehrt das Verfahren zum Ausgang zurück. Stellt sich hingegen in Schritt S1 heraus, dass die Einschalttemperatur T1ein des Normalkühlfachs überschritten ist, dann versetzt die Steuereinheit das Wegeventil 10 in Schritt S3 in Reihenstellung, d.h. der über die Kapillare 11 verlaufende Leitungszweig ist offen, der über die Kapillare 12 verlaufende geschlossen, so dass, wenn im darauffolgenden Schritt S4 der Verdichter eingeschaltet wird, Kältemittel über beide Verdampfer 5, 6 fließt. Obwohl nur Kühlbedarf im Normalkühlfach 2 festgestellt wurde, werden also beide Fächer 2, 3 gekühlt.

Wenn nach einiger Zeit des Verdichterbetriebs die Temperatur des Normalkühlfachs 2 unter dessen Ausschaltgrenztemperatur T1aus abgefallen ist, versetzt die Steuereinheit 13 das Wegeventil 10 in die Gefrierfachstellung, d.h. das Kältemittel wird über die Kapillare 12 am Verdampfer 5 des Normalkühlfachs 2 vorbeigeleitet. Erst wenn in Schritt S7 festgestellt wird, dass auch die Ausschaltgrenztemperatur T2aus des Gefrierfachs unterschritten ist, wird der Verdichter 7 in Schritt S12 wieder ausgeschaltet.

Indem auf diese Weise das Gefrierfach 3 jedes Mal bis an seine Ausschaltgrenztemperatur T2aus gekühlt wird, wenn das Normalkühlfach 2 Kühlungsbedarf hat, kann unter normalen Betriebsbedingungen erreicht werden, dass das Gefrierfach 3 seine Einschaltgrenztemperatur T2ein niemals erreicht, und dass jeder Verdichterstart auf einen Kühlungsbedarf des Normalkühlfachs 2 zurückgeht. Dass in Schritt S2 eine Überschreitung der Gefrierfach-Einschalttemperatur T2ein festgestellt wird kommt daher allenfalls in Ausnahmesituationen, etwa nach längerem Offenstehen der Gefrierfachtür, vor. Wenn dies geschieht, wird in Schritt S8 die Temperatur Tnk des Normalkühlfachs mit einer intermediären Temperatur T1 int verglichen, die zwischen Ein-und Ausschaltgrenztemperaturen des Normalkühlfachs liegt. Wenn T1 int überschritten ist, dann ist in Kürze mit Kühlungsbedarf des Normalkühlfachs 2 zu rechnen, und um zu vermeiden, dass dieser Kühlungsbedarf auftritt, während der Verdichter 7 ausschließlich das Gefrierfach 3 versorgt, verzweigt in diesem Fall das Verfahren zu Schritt S3, so dass wiederum von vornherein beide Fächer gekühlt werden. Nur wenn eine Temperatur Tnk des Normalkühlfachs unterhalb T1 int erwarten lässt, dass das Gefrierfach 3 auf seine Ausschaltgrenztemperatur T2aus gekühlt werden kann, bevor das Normalkühlfach wieder Kühlungsbedarf hat, wird das Wegeventil in Schritt S9 in die Gefrierfachstellung gebracht und der Verdichter in Schritt S10 eingeschaltet und so lange betrieben, bis T2aus unterschritten ist (S11).

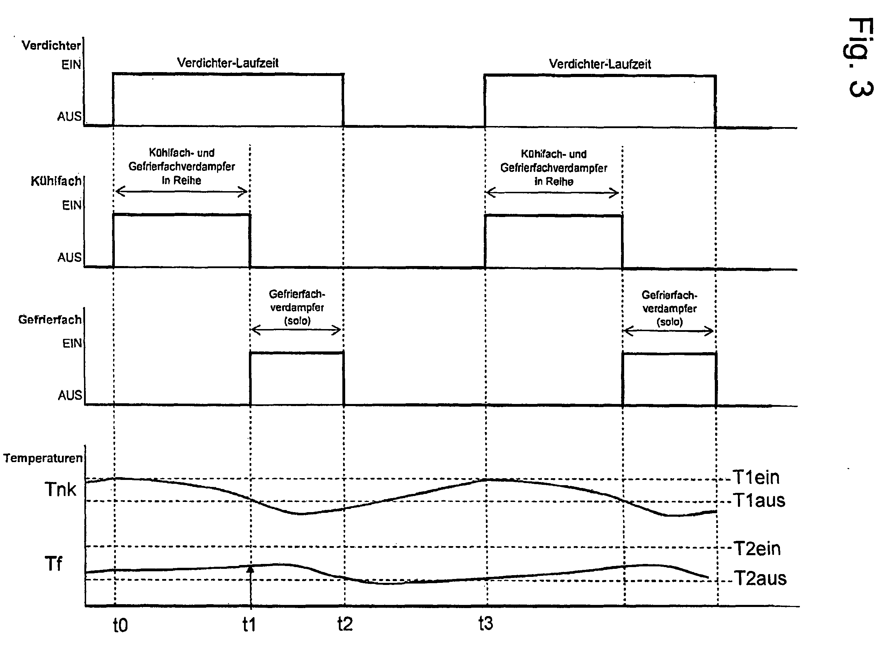

Fig. 3 zeigt einen aus dem dargestellten Verfahren resultierenden typischen Ablauf von Betriebsphasen des Verdichters und die daraus resultierenden Temperaturen des Kühlfachs und des Gefrierfachs als Funktionen der Zeit. Zu einem Zeitpunkt t0 überschreitet die Temperatur des Normalkühlfachs 2 die Einschaltgrenztemperatur T1ein, und der Verdichter 7 geht in Betrieb. Während die Temperatur Tnk des Normalkühlfachs 2 nach kurzer Zeit zu fallen beginnt, setzt sich bei der Gefrierfachtemperatur Tf der Anstieg noch fort, da es in der Reihenstellung des Wegeventils 10 einige Zeit dauert, bis frisches flüssiges Kältemittel in den stromabwärts gelegenen Gefrierfachverdampfer 6 gelangt. Zum Zeitpunkt t1 ist die Ausschaltgrenztemperatur T1aus des Normalkühlfachs erreicht, und der Normalkühlfach-Verdampfer 5 wird durch Umschalten des Wegeventils 10 aus dem Kältemittelstrom ausgekoppelt, während der Gefrierfach-Verdampfer 6 weiter versorgt wird. Spätestens jetzt zeigt sich auch eine deutliche Abnahme von Tf.

Zum Zeitpunkt t2 ist auch beim Gefrierfach 3 die Ausschaltgrenztemperatur T2aus erreicht, und der Verdichter 7 wird wieder abgeschaltet. Zu dieser Zeit liegt die Abtrennung des Normalkühlfachs 2 von der Kältemittelversorgung schon einige Zeit zurück, und die Temperatur Tnk hat bereits wieder zu steigen begonnen. Da die Differenz zwischen den beiden Grenztemperaturen T1aus-T1ein beim Normalkühlfach 2 deutlich kleiner ist als die entsprechende Differenz T2aus-T2ein beim Gefrierfach 3, erreicht ersteres auch früher, zum Zeitpunkt t3, wieder seine Einschaltgrenztemperatur T1 ein, und der oben beschriebene Zyklus wiederholt sich.

## Patentansprüche

1. Kältegerät, insbesondere Haushaltskältegerät, mit wenigstens einer ersten und einer zweiten Lagerkammer (2, 3), wobei der ersten Lagerkammer (2) ein erster Verdampfer (5) und ein erster Temperaturfühler (14) zugeordnet sind und der zweiten Lagerkammer (3) ein zweiter Verdampfer (6) und ein zweiter Temperaturfühler (15) zugeordnet sind, einem Verdichter (7) und einem Wegeventil (10), wobei in einer ersten Stellung des Wegeventils (10) der zweite Verdampfer (6) über den ersten Verdampfer (5) mit einem Druckanschluss eines Verdichters (7) verbunden ist und in einer zweiten Stellung des Wegeventils (10) der zweite Verdampfer (6) unter Umgehung des ersten Verdampfers (5) mit dem Druckanschluss verbunden ist, und einer Steuerschaltung (13), die eingerichtet ist, bei laufendem Verdichter (7) das Wegeventil (10) von der ersten in die zweite Stellung umzuschalten (S6), wobei die Steuerschaltung (13) eingerichtet ist, wenn die vom ersten Temperaturfühler (14) erfasste Temperatur (Tnk) einen ersten Einschaltgrenzwert (T1 ein) überschritten hat (S1), zunächst den Verdichter (7) zu betreibe (S4), während das Wegeventil (10) sich in der ersten Stellung befindet (S3), und **dadurch gekennzeichnet, dass** die Steuerschaltung (13) eingerichtet ist, den Verdichter (7) auszuschalten (S12), wenn die von beiden Temperaturfühlern (14, 15) erfassten Temperaturen (Tnk, Tf) zugeordnete erste bzw. zweite Ausschaltgrenzwerte (T1 aus, T2aus) unterschritten haben (S5, S7).

2. Kältegerät nach Anspruch 1, **dadurch gekennzeichnet, dass** die Steuereinheit (13) eingerichtet ist, das Wegeventil (10) dann von der ersten in die zweite Stellung umzuschalten (S6), wenn die vom ersten Temperaturfühler (14) erfasste Temperatur (Tnk) den ersten Ausschaltgrenzwert (T1 aus) unterschritten hat (S5), bevor die vom zweiten Temperaturfühler (15) erfasste Temperatur (Tf) den zweiten Ausschaltgrenzwert (T2aus) unterschritten hat.

3. Kältegerät nach Anspruch 1 oder 2, **dadurch gekennzeichnet, dass** die Steuereinheit (13) eingerichtet ist, wenn die vom zweiten Temperaturfühler (15) erfasste Temperatur (Tf) einen zweiten Einschaltgrenzwert (T2ein) überschritten hat (S2), den Verdichter (7) mit dem Wegeventil (10) in der ersten Stellung zu starten (S3, S4), wenn die vom ersten Temperaturfühler (14) erfasste Temperatur (Tnk) über einem intermediären Grenzwert (Tint) liegt (S8), und den Verdichter (7) mit dem Wegeventil (10) in der zweiten Stellung zu starten (S9, S10), wenn die vom ersten Temperaturfühler (14) erfasste Temperatur (Tnk) unter dem intermediären Grenzwert (Tint) liegt.

4. Kältegerät nach einem der vorhergehenden Ansprüche, **dadurch gekennzeichnet, dass** die Differenz zwischen zweitem Einschaltgrenzwert (T2ein) und zweitem Ausschaltgrenzwert (T2aus) größer ist als die Differenz zwischen erstem Einschaltgrenzwert (T1ein) und erstem Ausschaltgrenzwert (T1aus).

5. Kältegerät nach einem der vorhergehenden Ansprüche, **dadurch gekennzeichnet, dass** der Strömungswiderstand eines die Verdampfer (5, 6) verbindenden Leitungsabschnitts klein ist gegenüber demjenigen der Verdampfer (5, 6).

6. Kältegerät nach Anspruch 5, **dadurch gekennzeichnet, dass** einer der Verdampfer (5) in einer von der zugeordneten Lagerkammer (2) getrennten Verdampferkammer untergebracht ist und dass ein Ventilator zum Antreiben eines Luftaustauschs zwischen dieser Lagerkammer (2) und der Verdampferkammer durch die Steuereinheit (13) gesteuert ist.

7. Kältegerät nach Anspruch 5 oder 6, **dadurch gekennzeichnet, dass** einer der Verdampfer (6) in unmittelbarem thermischem Kontakt mit der zugeordneten Lagerkammer (3) angeordnet ist.

## Claims

1. Refrigeration device, in particular a household refrigeration device, having at least one first and one second storage chamber (2, 3), wherein a first evaporator (5) and a first temperature sensor (14) are associated with the first storage chamber (2) and a second evaporator (6) and a second temperature sensor (15) are associated with the second storage chamber (3), and having an evaporator (7) and a directional control valve (10), wherein in a first position of the directional control valve (10) the second evaporator (6) is connected via the first evaporator (5) to a pressure connection of an evaporator (7) and in a second position of the directional control valve (10) the second evaporator is connected to the pressure connection by bypassing the first evaporator (5), and having a control circuit (13) which is set up so that when the evaporator (7) is running it switches (S6) the directional control valve (10) from the first to the second position, wherein the control circuit (13) is set up, if the temperature (Tnk) detected by the first temperature sensor (14) has exceeded (S1) a first activation limit value (T1on), initially to operate (S4) the evaporator (7) while the directional control valve (10) is in the first position (S3), and **characterised in that** the control circuit (13) is set up so as to deactivate (S12) the evaporator (7) if the temperatures (Tnk, Tf) detected by both temperature sensors (14, 15) have fallen below (S5, S7) assigned first or second deactivation limit values (T1off, T2off).

2. Refrigeration device according to claim 1, **characterised in that** the control unit (13) is set up so as to switch (S6) the directional control valve (10) from the first to the second position if the temperature (Tnk) detected by the first temperature sensor (14) has exceeded (S5) the first deactivation limit value (T1off), before the temperature (Tf) detected by the second temperature sensor (15) has fallen below the second deactivation limit value (T2off).

3. Refrigeration device according to claim 1 or 2, **characterised in that** the control unit (13) is set up so that if the temperature (Tf) detected by the second temperature sensor (15) has exceeded (S2) a second activation limit value (T2on), it starts (S3, S4) the evaporator (7) with the directional control valve (10) in the first position, if the temperature (Tnk) detected by the first temperature sensor (14) lies above (S8) an intermediate limit value (Tint), and starts (S9, S10) the evaporator (7) with the directional control valve (10) in the second position, if the temperature (Tnk) detected by the first temperature sensor (14) lies below the intermediate limit value (Tint).

4. Refrigeration device according to one of the preceding claims, **characterised in that** the difference between a second activation limit value (T2on) and a second deactivation limit value (T2off) is greater than the difference between a first activation limit value (T1on) and a first deactivation limit value (T1off).

5. Refrigeration device according to one of the preceding claims, **characterised in that** the flow resistance of a pipe section connecting the evaporators (5, 6) is small compared to that of the evaporators (5, 6).

6. Refrigeration device according to claim 5, **characterised in that** one of the evaporators (5) is accommodated in an evaporation chamber separate from the associated storage chamber (2) and **in that** a fan for driving an exchange of air between said storage chamber (2) and the evaporation chamber is controlled by the control unit (13).

7. Refrigeration device according to claim 5 or 6, **characterised in that** one of the evaporators (6) is arranged in direct thermal contact with the associated storage chamber (3).

## Revendications

1. Appareil frigorifique, notamment appareil frigorifique à usage domestique, comprenant au moins une première et une deuxième chambres de stockage (2, 3), un premier évaporateur (5) et un premier capteur de température (14) étant attribués à la première chambre de stockage (2) et un deuxième évaporateur (6) et un deuxième capteur de température (15) étant attribués à la deuxième chambre de stockage (3), comprenant un compresseur (7) et une vanne directionnelle (10), le deuxième évaporateur (6), dans une première position de la vanne directionnelle (10), étant relié à un raccord de pression d'un compresseur (7) par l'intermédiaire du premier évaporateur (5) et le deuxième évaporateur (6), dans une deuxième position de la vanne directionnelle (10), étant relié au raccord de pression en contournant le premier évaporateur (5), et comprenant un circuit de commande (13) qui est conçu pour commuter (S6) la vanne directionnelle (10) de la première en la deuxième position lorsque le compresseur (7) est en marche, le circuit de commande (13) étant conçu, lorsque la température (Tnk) enregistrée par le premier capteur de température (14) a dépassé (S1) une première valeur limite de mise en fonction (T1ein), pour faire fonctionner (S4) d'abord le compresseur (7) pendant que la vanne directionnelle (10) se trouve dans la première position (S3), et **caractérisé en ce que** le circuit de commande (13) est conçu pour mettre le compresseur (7) hors fonction (S12) lorsque les températures (Tnk, Tf) enregistrées par les deux capteurs de température (14, 15) ont dépassé vers le bas (S5, S7) des premières resp. deuxièmes valeurs limites de mise hors fonction (T1 aus, T2aus) correspondantes.

2. Appareil frigorifique selon la revendication 1, **caractérisé en ce que** l'unité de commande (13) est conçue pour commuter (S6) la vanne directionnelle (10) de la première en la deuxième position lorsque la température (Tnk) enregistrée par le premier capteur de température (14) a dépassé vers le bas (S5) la première valeur limite de mise hors fonction (T1aus) avant que la température (Tf) enregistrée par le deuxième capteur de température (15) ait dépassé vers le bas la deuxième valeur limite de mise hors fonction (T2aus).

3. Appareil frigorifique selon la revendication 1 ou 2, **caractérisé en ce que** l'unité de commande (13) est conçue, lorsque la température (Tf) enregistrée par le deuxième capteur de température (15) a dépassé (S2) une deuxième valeur limite de mise en fonction (T2ein), pour démarrer (S3, S4) le compresseur (7) avec la vanne directionnelle (10) dans la première position, lorsque la température (Tnk) enregistrée par le premier capteur de température (14) est située au-dessus d'une valeur limite intermédiaire (Tint), et pour démarrer (S9, S10) le compresseur (7) avec la vanne directionnelle (10) dans la deuxième position, lorsque la température (Tnk) enregistrée par le premier capteur de température (14) est située en dessous (S8) de la valeur limite intermédiaire (Tint).

4. Appareil frigorifique selon l'une quelconque des revendications précédentes, **caractérisé en ce que** la différence entre la deuxième valeur limite de mise en fonction (T2ein) et la deuxième valeur limite de mise hors fonction (T2aus) est plus grande que la différence entre la première valeur limite de mise en fonction (T1ein) et la première valeur limite de mise hors fonction (T1 aus).

5. Appareil frigorifique selon l'une quelconque des revendications précédentes, **caractérisé en ce que** la résistance d'écoulement d'une section de conduite reliant l'un des évaporateurs (5, 6) est plus petite par rapport à celle des évaporateurs (5, 6).

6. Appareil frigorifique selon la revendication 5, **caractérisé en ce que** l'un des évaporateurs (5) est logé dans une des chambres d'évaporateur séparée de la chambre de stockage correspondante (2) et **en ce qu'**un ventilateur destiné à entraîner un échange d'air entre cette chambre de stockage (2) et la chambre d'évaporateur est commandé par l'unité de commande (13).

7. Appareil frigorifique selon la revendication 5 ou 6, **caractérisé en ce que** l'un des évaporateurs (6) est disposé en contact thermique direct avec la chambre de stockage correspondante (3).
